(19)

Europäisches
Patentamt

European
Patent Office

Office européen
des brevets

(11) **EP 2 899 720 A1**

(12) **EUROPEAN PATENT APPLICATION**

(43) Date of publication:
**29.07.2015 Bulletin 2015/31**

(51) Int Cl.:
***G10L 19/018*** (2013.01)    ***G01C 21/20*** (2006.01)

(21) Application number: **14305090.4**

(22) Date of filing: **22.01.2014**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br><br>(71) Applicant: **Thomson Licensing<br>92130 Issy-les-Moulineaux (FR)**<br><br>(72) Inventors:<br>• **Baum, Peter Georg<br>30539 Hannover (DE)** | • **Diehl, Eric<br>92130 Issy (FR)**<br>• **Bonjour, Xavier<br>78560 Le Port Marly (FR)**<br><br>(74) Representative: **Kurth, Dieter<br>Deutsche Thomson OHG<br>European Patent Operations<br>Karl-Wiechert-Allee 74<br>30625 Hannover (DE)** |

(54) **Real-time position estimation in indoor environment using audio watermarking**

(57)    A method, an apparatus and a system for efficient real-time position estimation in indoor environment using audio watermarking are disclosed, wherein a receiving device receives at a current position a sound signal from each one of a set of at least three sound signal sources each providing the same or different sounds with an individual watermark and wherein the individual watermark embedded in the audio signal comprises a mark symbol in a pattern individual for the at least three sound sources, and wherein the real-time position of the receiving device is estimated by comparing delays of arrival between said mark symbols received from said at least three sound sources in the receiving device. The mark symbol in a pattern individual for the at least three sound signal sources is a mark symbol at an individual position in the pattern, an individual mark symbol at the same position in the pattern, or a combination of both. It is e.g. applicable to estimate the position of a visitor in a large hall in a museum to provide additional information about objects of the exhibition the visitor is interested in via a mobile device.

Fig. 1

EP 2 899 720 A1

**Description**

**FIELD OF THE INVENTION**

The invention relates to a method, an apparatus and a system for efficient real-time position estimation in indoor environment using audio watermarking e.g. for estimating the position of a visitor in a large hall in a museum to provide via mobile device additional information about objects of the exhibition the visitor is interested in.

**BACKGROUND OF THE INVENTION**

Methods for real-time position estimation in indoor environment using audio watermarking based on time of arrival of watermarking signals by measuring the time an audio signal takes from a known to an unknown position, using different pseudo-random sequences for each loudspeaker, or using the fact that a watermark degrades according to distances from loudspeakers to a microphone, are well known. The disadvantages of this approach consist in poor temporal and spatial resolutions and in heavy computational load. Furthermore, a maximum-likelihood method for estimating a recording position inside several loudspeakers is known, which could be useful for tracking illegal recordings of movies. As it has been found that a method which takes into account only the delays of the watermarked signals is not applicable to location-based services requiring a real-time position estimation, a maximum-likelihood estimation based on watermarking strengths calculated by a watermark detection algorithm, indicating the accuracy of time, attenuation and other factors has been proposed. A different pseudo random array is assigned to each watermark signal so that all of the watermark signals can and shall be independently detected. Since different pseudo-random sequences are used for each loudspeaker, such system requires a high computational expenditure because each pseudo-random sequence requires one correlation to be calculated and is therefore not applicable for an installation equipped with a lot of loudspeakers providing the same sound signal and a mobile detector device requiring a little computation power.

**SUMMARY OF THE INVENTION**

It is an aspect of the present invention to propose an efficient but nevertheless highly accurate real-time position estimation in indoor environment using audio watermarking of a sound signal from each of a set of at least three sound signal sources, which requires less correlation expenditure and little computation power of a mobile receiving device generating information about a current position in indoor environment, and to provide additional information in an area including said position and dependent on said area as e.g. objects in a museum. According to an aspect of the invention, a method for real-time position estimation in indoor environment with audio watermarking by a receiving device receiving at a current position a sound signal from each of a set of at least three sound signal sources providing each one with the same audio signal with an individual watermark is disclosed. The individual watermark embedded in the audio signal comprises a pattern including a mark symbol at an individual position for each sound source within said pattern, different mark symbols at the same position or a combination of both, and zero symbols. The position of the receiving device and a location in a room or hall is estimated in real-time by comparing delays of arrival between said mark symbols received from said sound sources in the receiving device and the receiving device provides e.g. additional information in a predetermined area and dependent on said area by evaluating the current position whether or not it is a position inside or outside said predetermined area. Said additional information is e.g. stored in the receiving device or requested via a further communication channel and reproduced at arrival in said predetermined area.

A method, an apparatus and a system for efficient real-time position estimation in indoor environment using audio watermarking as determined in independent claims are disclosed. Advantageous embodiments of the invention are disclosed in respective dependent claims. The system is very flexible and easy to adapt to an exhibition. Additional information with regard to locations where additional information shall be provided is stored and changeable in the receiving device and it is also easy to alter and to adapt the information with regard to a location or object. Information to be reproduced in a certain area also can be provided by a corresponding link to a further communication channel generated in the receiving device.

The individual watermark embedded in the audio signal from at least three sound sources is used to determine in real-time and with low expenditure a current position where the receiving device is located by correlating the sound signals received from at least three sound sources. The individual watermark comprises a pattern individual for each of the sound sources e.g. by a specific position of a pattern in a block of patterns or different pattern at the same position in a block of patterns. The blocks of patterns or the pattern itself are synchronized with the audio stream reproduced with loudspeakers and chosen in such a way, that the receiving device does not has to calculate more correlations as needed for a position estimation in a certain area.

Although only very small differences in a delay between audio signals are provided by three sound sources with regard to a specific distance to the sound sources, a real-time position estimation with a mobile receiving device is disclosed, wherein the position is determined as a specific location in an indoor environment by an audio signal having an individual watermark for each of the sound sources. A real-time position estimation with low expenditure is disclosed by using a pattern individual for at least three sound sources. Although only relative distances can be determined by correlating individual watermark signals, nevertheless, a real-time position estimation e.g. for estimating the position of a visitor in a large hall in a museum is disclosed to provide via the mobile device additional information about objects of the exhibition the visitor is interested in. Since the location where loudspeakers - the sound sources - are arranged is known, the position of the receiving device is calculated in the receiving device with those relative distances by taking into account the speed of sound and the sound sample frequency. That means that the location of a receiving device is calculated relative to locations where the sound sources are arranged, so that by using the known arrangement of sound sources identified by individual audio watermarks, the location of the receiving device in the room or hall is determined. Advantageously, the sound sources and loudspeakers respectively are arranged in corners of the room or hall. Please note that the terms location and position are congruently and synonym used in this application.

Using a specific watermark pattern for position estimation is disclosed for a low load of a processor in the receiving device.

A watermark consists of a block of patterns of a predetermined length, where the length of the half of a block in the time domain should be larger than a maximum time delay difference between two sound sources at a location to be determined. Different watermark patterns are constructed such that for each block position, each non-zero base pattern is present at most once. Only a zero base pattern may be present several times. The number of base pattern is chosen dependent on an available power of the processor of the receiving device, acceptable power consumption, acceptable time delay for the position estimation and the number of sound sources. Due to its distribution in the watermark of the audio signal, each base pattern has a predetermined length of e.g. 16k samples and should be orthogonal to all other base patterns. Orthogonal means in this context that the correlation is as low as possible or in other words, that the patterns are as much as possible or at least sufficiently different so that they will be reliably detected and distinguished by a correlator.

A zero base pattern may be either a watermark pattern orthogonal to the other base patterns or no watermarking at all, i.e. the audio signal is not altered in the block. The time delay between patterns that have a base pattern at the same position is calculated by correlating the signal with the corresponding base pattern. Since the length of a base pattern is known for the decoder in the receiving device, the delay between patterns that contain a same base pattern at different positions also can be calculated by subtracting or adding a multiple of the length of a pattern or base pattern to the measured time delay. Length of a base pattern means the duration for which the base pattern occurs in the audio and sound signal respectively. It starts with a synchronization sequence, which is e.g. realized by a special base pattern or a combination of base patterns to enable a synchronisation between individual watermarks and individual patterns respectively, wherein individual means a specific watermark or pattern assigned to a specific sound source like a loudspeaker. That means that in the system for position estimation an audio signal, via embedder embedding a mark symbol in a pattern of a watermark individual for the at least three sound sources, is distributed to at least three loudspeakers, and delays of arrival between said mark symbols received from said sound sources in the receiving device are calculated to determine differences in the distance to said sound sources.

According to an embodiment of the invention, embedders are connected with each other for synchronisation purposes and according to a further embodiment of the invention a signal for transmitting the pattern synchronously from each loudspeaker is provided from the distributer of the audio signal to the loudspeakers.

The receiving device comprises correlating means for correlating the mark symbols of patterns in the received audio signal. A delay of arrival between said mark symbols indicates a distance of the receiving device to a specific sound source identified by a mark symbol in a pattern of a watermark individual and specific for a specific sound source. The disclosed use of individual patterns assigned as watermark to at least three sound sources providing the same audio signal requires advantageously low expenditure as an existing infrastructure can be used for position estimation. Low processor power and power consumption are needed in the receiving device and a current position or a location where the receiving device is currently located is determined with high precision of the localisation. As only few processor cycles are needed for position estimation, an advantageous implementation in a mobile device and real-time estimation is ensured. The system is very flexible and easy to adapt to different exhibitions as e.g. an App in a mobile phone.

The disclosed position estimation by using individual audio watermark for at least three sound sources is e.g. advantageously applicable to provide a visitor in a large hall in a museum with additional information about objects of the exhibition via a mobile device. Additional information is e.g. stored in and reproduced by the receiving device at arrival at a location in a predetermined area detected by the receiving device or is demanded via a further wireless communication channel for reproducing the additional information. The additional information may be e.g. visual or audio information about the author of the exhibited object.

For a better understanding, the invention shall now be explained in more detail in the following description with reference to the figures. It is understood that the invention is not limited to the described embodiments and that specified features can also expediently be combined and/or modified without departing from the scope of the present invention as defined in the appended claims.

## BRIEF DESCRIPTION OF THE DRAWINGS

The accompanying drawings, which are included to provide a further understanding of the invention, and are incorporated in and constitute a part of this specification, illustrate embodiments of the invention and together with the description serve to explain the principles of the invention.
In the drawings:

Fig. 1 shows a schematic illustrating distances of a location of a receiving device with regard to walls and corners in a room for position estimation,

Fig. 2 shows a schematic illustrating individual pattern including a mark symbol at an individual position for each sound source within said pattern,

Fig. 3 shows a schematic illustrating individual pattern including different mark symbols at the same position and a mark symbol at an individual position for each sound source within said pattern,

Fig. 4 illustrates an audio stream with a mark symbol,

Fig. 5 shows a schematic illustrating a system for position estimation,

Fig. 6 shows a schematic of an arrangement for embedding individual watermarks,

Fig. 7 shows a schematic illustrating the method and apparatus for pattern detection in the receiving device,

Fig. 8 shows a flow diagram for embedding audio watermarks and

Fig. 9 shows a flow diagram for detecting audio watermarks.

## DETAILED DESCRIPTION OF PREFERED EMBODIMENTS

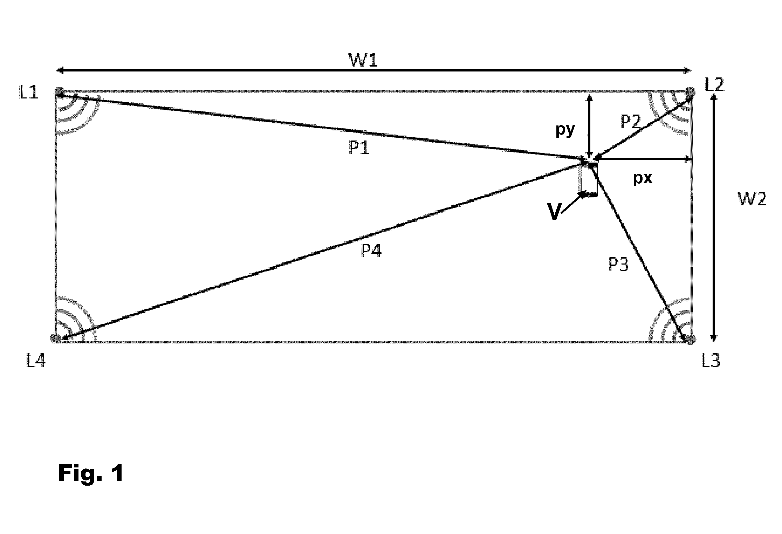

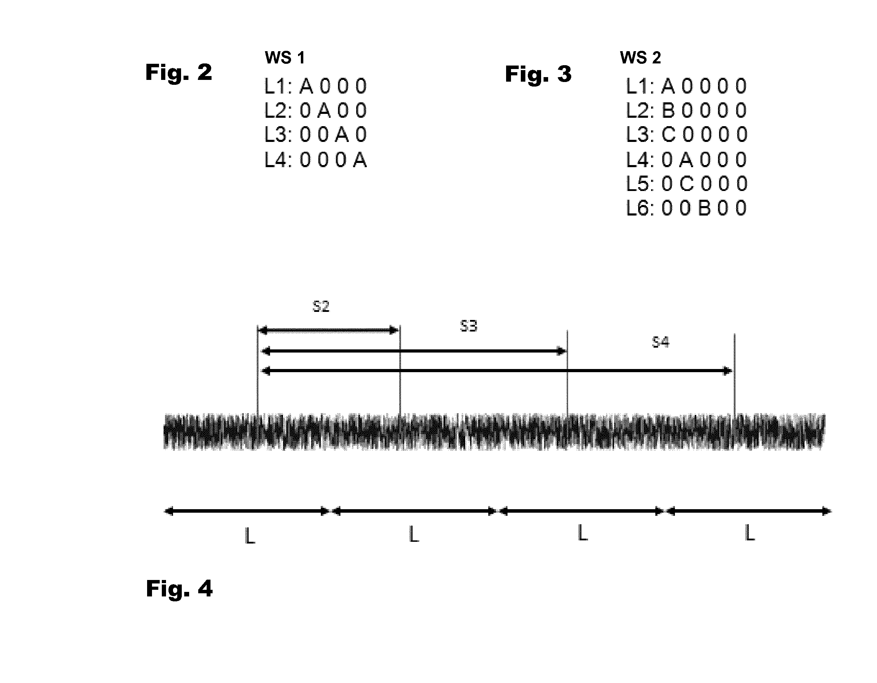

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. Reference signs are unitary used in drawings and formulas.
In the following the invention is explained with reference to Fig.1 illustrating a receiving device held by a visitor V in a hall wherein e.g. four loudspeakers L1 to L4 provide a common sound signal. The loudspeakers L1 to L4 are arranged in the corners of the hall. The hall has a rectangular bottom layer and a first and a second wall W1, W2.
It is an aspect of the present invention to provide the visitor V in a large hall as e.g. in a museum via a mobile device with additional information about objects of the exhibition the visitor V is interested in. The exhibition comprises several objects for which specific information shall be provided. This requires an efficient real-time position estimation of the visitor V and the mobile device respectively with less expenditure in an indoor environment. A mobile device with low processor power shall be used. The term position estimation is used because only the position or location of the microphone will be exactly calculated and as the receiving device including the microphone is held by the visitor V it is only about the position or location of the visitor V so that it means that the position of the visitor V only can be assumed or estimated by the location of the microphone of the receiving device.
Therefore, a configuration of the mobile device as a receiving device with a microphone is disclosed which generates position information in the receiving device allowing a position estimation of a current location where the visitor V of the exhibition could be interested in, or shall be provided with additional information about an object placed in the area of said position or location.
Therefore, a method, an apparatus and a system for real-time position estimation in indoor environment using audio watermarking are disclosed and it is an aspect of the invention that an individual watermark comprising a mark symbol in a pattern individual for at least three sound sources is used for a real-time position estimation requiring low expenditure.
According to a first embodiment of the invention illustrated in Fig. 2, a mark symbol in a pattern individual for at least three sound sources is a base pattern A as a mark symbol at an individual position in the pattern for each of at least three sound sources. Fig. 2 shows four patterns each being different and assigned to a specific loudspeaker L1 to L4. Although three sound sources would be sufficient to determine a current location, the embodiment reads on four sound sources and loudspeakers L1 to L4 respectively, which increases the reliability in case that a direction to one of the loudspeakers L1 to L4 is blocked by an object placed in the hall. As shown in Fig.2, an individual i.e. a specific pattern comprising a base pattern A and zero pattern 0 forming a block of patterns of a watermark of equal size in the audio signal for all of the loudspeakers L1 to L4 is disclosed and a specific block is assigned to each of the loudspeakers L1 to L4 as a first watermark signal WS1, wherein the order of the position of a base pattern A as the mark symbol in the block of patterns is changed to become individual for each of the loudspeakers L1 to L4.

However, the invention is not limited to said embodiment. As e.g. shown in Fig. 3, watermark signals WS2 with extended pattern block length or different mark symbols are applicable to identify more than three loudspeakers in specific embodiments. Fig. 3 illustrates watermark signals WS2 having different base patterns A, B, C as mark symbol at the same location in a pattern block or individual mark symbols at the same position as e.g. indicated in Fig. 3 for loudspeakers L1 to L3 and loudspeakers L4 and L5 or a mark symbol at an individual position in pattern blocks as e.g. indicated in Fig. 3 for loudspeakers L1 and L4, loudspeakers L2 and L6 as well as loudspeakers L3 and L5. That means that advantageously different watermark patterns for the loudspeakers L1 to L6 are constructed such that for each block position, each non-zero base pattern is present at most once. Only the zero base pattern may be present several times to complete a block of patterns.

The time delay between patterns that have a different base pattern A, B and C at the same position can easily be calculated by correlating the signal with the corresponding base pattern. Since the length or duration of a pattern as e.g. a base pattern A is known to the decoder, it is in the same way possible to calculate the delay between patterns that contain a same base pattern A at different positions by subtracting or adding a multiple of the duration or length of the base pattern A in view of the measured delay. Length and duration of a base pattern are synonym as the length of a base pattern is predetermined as e.g. to 16 k samples which means for a sampling rate of 48 kHz a duration of about 0,3 s because 1k sample is determined as 1024 samples. That means that mark symbols and a zero base pattern according to a preferred embodiment have advantageously the same extension of e.g. 16k samples of the audio signal.

With regard to Fig. 1, it is imaginable that a receiving device of a visitor V will receive with a certain delay an audio signal synchronously transmitted from loudspeakers L1 to L4. Such a delay is really perceptible by the visitor V if it is below 25ms. This relates to the distance between the sound sources of about 8.5m . Although only an audio signal or a sound perceptible by a visitor V as the same signal from each loudspeaker is available in the hall, it is disclosed to use such a unitarily perceptible audio signal for position and location estimation respectively by embedding an individual watermark for at least three sound sources.

In the embodiment illustrated in Fig. 1, loudspeakers L1 to L4 are arranged in corners of the hall only for simplifying a calculation of a current position of the visitor V and the receiving device respectively in the hall. Every arrangement of loudspeakers is possible which ensures that the visitor V and his/her receiving device receives at least three audio signals from loudspeakers providing an individual watermark in the audio signal, each one specific for one of the at least three loudspeakers.

Although a delay in the sound signal in certain different distances to the source of sound is not perceptible by a human being, the delay is detectable by correlating the individual watermarks embedded in the sound signal provided by loudspeakers.

Fig. 4 illustrates an audio stream with a mark symbol as e.g. a base pattern A at an individual position in blocks of patterns. The watermark is a pattern of noise which is not perceptible by a human being; however, it is detectable as a marksymbol and causes a peak in a correspondingly correlated audio signal. That means that

Fig. 4 illustrates the first watermark signal WS1 individual for loudspeakers L1 to L4 as illustrated in Fig. 2.

As shown in Fig. 1, the visitor V with the receiving device is next to loudspeaker L2 and has a shortest position P2 with regard to loudspeaker L2, a larger position P3 with respect to loudspeaker L3 and the largest distance as a position P4 to loudspeaker L4. That means, as illustrated in Fig. 4, that individual watermarks as e.g. mark symbol base pattern A embedded in watermarks of the audio signal reproduced by loudspeakers L1, L2, L3 and L4 will occur in the audio signal received by the receiving device of the visitor V with a certain delay. Variations in the number of samples S2 to S4 between detected mark symbols represent differences in distances of the microphone of the receiving device to loudspeakers L1, L2, L3 and L4. However, as due to a wireless communication no information about a start time about when a pattern has been sent out from a loudspeaker is available at the receiving side, only differences in distances of the receiving device to loudspeakers L1, L2, L3 and L4 can be calculated. The delay corresponds to differences in a number of samples S2 to S4 at which the mark symbol and a base pattern A respectively is detected in the received and recorded audio stream. However, said differences are not an indication of an absolute or real distance of the microphone to a loudspeaker after the arrival of a first pattern and watermark respectively has been detected. However, the duration which the sound, a pattern or a watermark needs until a first arrival for traveling from a loudspeaker to the microphone is neither known nor can be calculated from differences in the duration of transmission. Nevertheless it is used for position estimation.

For calculating differences in a distance of the microphone to loudspeakers L1 to L4, it is assumed that in case that the microphone would have the same distance to all loudspeakers L1 to L4, the peaks in the audio signal as a detected mark symbol would occur exactly in the same distance L corresponding to the length of a mark symbol in the audio stream.

However, at a location of the receiving device of the visitor V illustrated in Fig. 1, measured distances between the first peak and the following peaks as a number of samples S2 to S4 of the audio stream are e.g.:

S2 = L - 3284 samples
S3 = 2L - 2593 samples
S4 = 3L + 152 samples.

For this embodiment, it is assumed that the mark symbol in a pattern individual for the at least three sound signal sources is a mark symbol varying with regard to an individual position in the watermark assigned to a loudspeaker as illustrated in Fig. 2.

Symbols used in equations correspond to the used reference signs.

That means, differences in distances between loudspeakers L2 to L4 and the microphone and receiving device respectively can be calculated with regard to a mark symbol or watermark previously received as e.g. the first mark symbol or a watermark from the first loudspeaker L1. With a speed of sound of about 343 m/s and a sampling frequency of e.g. 48 kHz, a difference in the number of samples can be converted into a distance difference via the following equation:

$$\texttt{Distance[m]} \ = \ \texttt{(difference [samples] x speed of sound}$$
$$\texttt{[m/s]) / (sampling frequency [samples/s]).}$$

With measured differences of - 3284 samples in samples S2, of - 2593 samples in samples S3 and + 152 samples in samples S4, it corresponds to the following differences in distances to the first loudspeaker L1:

The microphone is 23,467 m closer to loudspeaker 2 than to loudspeaker 1.

The microphone is 18,529 m closer to loudspeaker 3 than to loudspeaker 1.

The microphone is 1,086 m farther away from loudspeaker 4 than from loudspeaker 1.

That means that differences in distances in the following denoted as differences d2, d3 and d4 in distances of the receiving device to loudspeakers L2, L3 and L4 with regard to the first loudspeaker L1 are detectable and will be calculated in the receiving device, as e.g. difference d2 - -23,467 m, difference d3 = -18,529 m and difference d4 = 1,086 m.

However, said differences d2, d3 and d4 in distances in the occurrence of watermarks in the received audio signal or differences in distances of the microphone to loudspeakers are only an indication that the microphone of the receiving device is more or less close to a loudspeaker. The disclosed use of individual watermarks makes it possible to identify loudspeaker L1 to L4 by a specific watermark, however, it seems not to be possible to calculate an absolute distance of the receiving device to each of the loudspeakers L1 to L4 form said differences d2 to d4 as there is no feature indicating the duration for a transmission of sound and embedded watermarks from loudspeakers to the receiving device due to a wireless transmission of audio signals.

Although the measured differences d2, d3 and d4 in distances are only relative distances and those differences seem not to be applicable for position estimation, position estimation is an aspect of the present invention as to determine a current location where a visitor V having a receiving device is interested in or shall be provided with additional information by using a mobile device.

Therefore, a further aspect - the geometry of the hall or room where the loudspeakers L1 to L4 are arranged - is taken into account. As illustrated in Fig. 1, a distance of the visitor V and the receiving device respectively orthogonal to a wall W1 of the hall is determined as distance py and a distance of the visitor V orthogonal to a wall W2 of the hall is determined as distance px. In that case, according to the basic geometry of the hall, the following equations are valid with regard to distances of the visitor V with the receiving device to loudspeakers L1 to L4 and with regard to the size of the walls W1 and W2.

$$\texttt{P1}^2 \ = \ \texttt{py}^2 \ + \ \texttt{(W1-px)}^2$$

$$\texttt{P2}^2 \ = \ \texttt{py}^2 \ + \ \texttt{px}^2$$

$$P3^2 = (W2-py)^2 + px^2$$

$$P4^2 = (W2-py)^2 + (W1-px)^2$$

However, distances px, py, P1, P2, P3 and P4 are unknown. However, as illustrated in Fig. 4, differences in a delay of arrival between mark symbols in a pattern individual for at least three sound sources have been measured and determined as distances d2, d3 and d4 between peaks detected in the received audio stream. As said distances d2, d3 and d4 between peaks detected in the received audio stream are assigned to specific loudspeakers L1 to L4 due to the individual mark symbol as e.g. d2 is a delay between the mark symbols received from loudspeaker L1 and loudspeaker L2 and represents a difference in the distance of the microphone to loudspeaker L1 and loudspeaker L2, the following equations for distances are also valid with regard to positions P1 to P4 in Fig. 1 as:

$$P2 = P1 - d2,$$

$$P3 = P1 - d3$$

and

$$P4 = P1 + d4.$$

As differences d2 to d4 can be measured, distances px, py as distances of the microphone with regard to the walls W1, W2 and in such a way the location of the microphone and the visitor V respectively are determined as it will be shown below by applying the equations mentioned above. Subtracting $P2^2 = py^2 + px^2$ from $p1^2 = py^2 + (W1-px)^2$ results in $P1^2-P2^2 = (W1-px)^2-px^2$, subtracting $P4^2 = (W2-py)^2 + (W1-px)^2$ from $P3^2 = (W2-py)^2 + px^2$ results in $P3^2-P4^2 = px^2-(W1-px)^2$ and adding the results results in $P1^2-P2^2+P3^2-P4^2 - 0$. Substituting P2 to P4 by the above mentioned equations including the differences d2 to d4 results in $P1^2-(P1-d2)^2+(P1-d3)^2-(P1+d4)^2 - 0$ so that a position P1 is determined by

$$P1 = (d2^2 - d3^2 + d4^2) / 2(d2 - d3 - d4).$$

It already has been shown above that $P1^2 -P2^2 = (W1-px)^2-px^2$ so that substituting P2 by P1-d2 results in $P1^2-(P1-d2)^2 = (W1-px)^2-px^2$ and $W1^2 - 2W1px = 2P1d2 - d2^2$ so that substituting position value P1 as determined above results in

$$px = (W1/2) + d2(d3^2-d4^2-d2d3-d2d4)/(2W1(d2-d3-d4)).$$

The distance py orthogonal to wall W1 of the hall is determined in a similar way as subtracting $P4^2 = (W2-py)^2 + (W1-px)^2$ form $p1^2 = py^2 + (W1-px)^2$ and subtracting $P3^2 = (W2-py)^2 + px^2$ from $P2^2 - py^2 + px^2$ results in $P1^2 -P4^2 = py^2-(W2-py)^2$ and $P2^2-P3^2 = py^2-(W2-py)^2$ so that by adding results
$P1^2-P4^2+P2^2-P3^2 - 2py^2-2(W2-py)^2$ and an replacement of P2 to P4 by differences d2 to d4 with regard to P1 results in $P1^2 + (P1-d2)^2 - (P1-d3)^2 - (P1-d4)^2 = 4W2py - 2W2^2$. Finally, P1 is replaced by $P1 - (d2^2 - d3^2 + d4^2) / 2(d2 - d3 - d4)$, so that the distance py orthogonal to wall W1 of the hall is

$$py = ((d4+d3-d2)W2^2+(d2-d3)d4^2+(d2^2-d3^2)d4))/(W2(2d4+2d3-2d2)).$$

That means e.g. for a hall with walls of W1 = 30 m and W2 = 10 m and corresponding distances between loudspeakers L1 to L4 that the position of the visitor V is estimated at a location in a distance of about py = 2 m to wall W1 and in a distance of about px = 3 m to wall W2 as it is the location at which the position of the microphone of the receiving device of the visitor V has been detected by using a mark symbol in a watermark individual for the at least three sound sources and wherein the real-time position of the receiving device is estimated by comparing delays of arrival between said mark symbols received from said at least three sound sources in the receiving device.

In the example disclosed above, the watermark uses the described scheme with only one base pattern as shown in Fig.2. The sound of each loudspeaker is watermarked with a specific pattern. The pattern is detected by a detector in the receiving device via correlation.

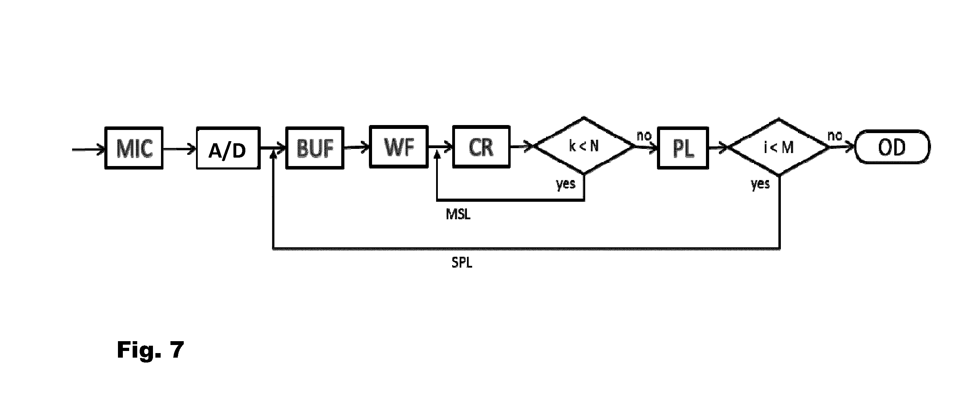

The structure of an exemplary audio watermark detector WMD is illustrated in a block diagram in Fig.7 which shows that analog/digital converted audio signals captured with the microphone MIC are applied to a buffer BUF for temporally storing the audio samples, and the buffer BUF via a whitening filter WF is connected to a correlator CR. The whitening filter WF supplies the correlator CR for detecting a base pattern respectively a mark symbol by a feedback loop checking the number N of base pattern as e.g. a base pattern A or different patterns A, B and C included in the watermark signal. Therefore, the whitening filter WF applies a window to the buffered digital audio signal and transforms blocks of audio samples into a frequency domain by applying a Discrete Fourier Transformation DFT, the magnitude of Fourier coefficients is set to 1 and the whitening filter WF transforms the blocks by applying an inverse Discrete Fourier Transformation IDFT back into the time domain and applies a window to provide overlap-add blocks for correlation. The correlator CR correlates the filtered audio blocks with all mark symbols N of the different audio watermarks in a mark symbol loop MSL and a connected pattern detector PL detects peaks and locations of symbols in symbol patterns in the number M of used symbol patterns and individual watermarks, respectively, for calculating corresponding time delays between arrivals of mark symbols and base patterns respectively. That means that the pattern detector PL provides a pattern which in a further feedback loop supplies the input of the buffer BUF with a number M of pattern blocks for relating a detected pattern to further received pattern, so that individual patterns provided by corresponding sound sources as e.g. loudspeaker L1 to L4 will be assigned to a corresponding sound source. That means that the pattern detector PL provides individual pattern PT with a mark symbol which identifies the one of the loudspeakers L1 to L4 which transmitted the pattern. Furthermore, an output unit OD is connected to the pattern detector PL, wherein the calculation of the current position of the microphone and receiving device respectively is performed as shown above.

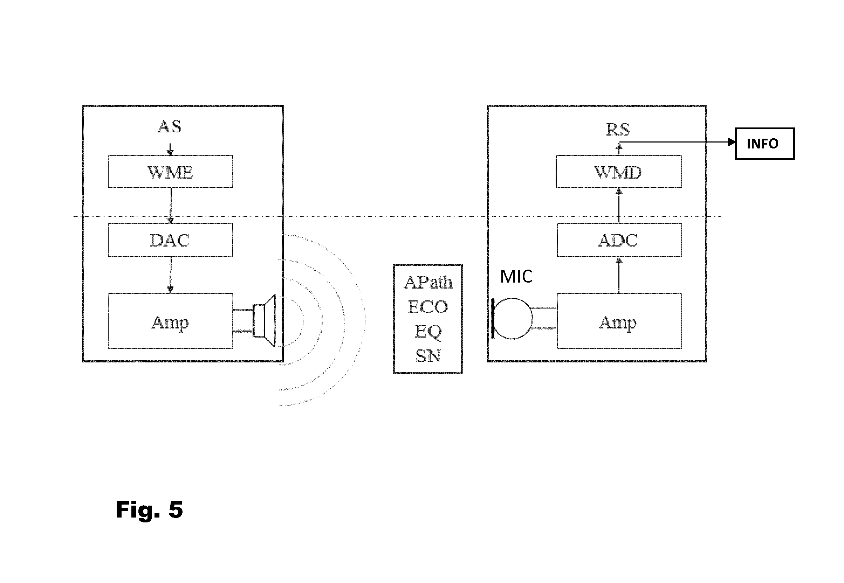

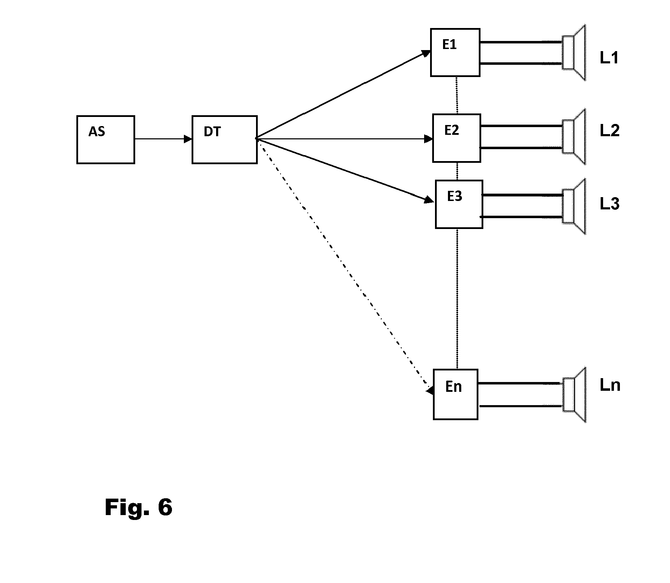

That means, as illustrated in Fig. 5, that an arrangement for efficient real-time position estimation in indoor environment using audio watermarks comprises sound sources, wherein an audio signal AS is applied to a watermark embedder WME or a watermark embedder WME is applied to an audio signal AS for embedding a pattern by a mark symbol individual for at least three sound sources as is shown in Fig. 6.

Fig.6 illustrates that the audio signal AS is applied to a distributer DT supplying several embedders E1 to En with the same audio signal for embedding patterns individual for each of loudspeakers L1 to Ln. Embedders E1 to En are connected with each other for a synchronous transmission of the pattern from each of the loudspeakers L1 to Ln, or to realize a synchronous transmission of the pattern dependent on the audio signal by loudspeakers L1 to Ln. Embedders E1 to En and watermark embedder WME respectively provide a digital audio signal applied to a digital/analog converter DAC supplying an amplifier Amp connected to a loudspeaker illustrated by the loudspeaker symbol in Fig. 5 at the transmitter side. The arrangement comprises furthermore a receiving device as receiver RS with a microphone MIC as an input receiving the sound signal including watermarks individual for each of at least three loudspeakers L1 to L3. The microphone MIC is connected to an analog/digital converter ADC via an amplifier Amp for supplying a watermark detector WMD including the means to detect and to measure delays in arrival of mark symbols in individual patterns as illustrated in Fig. 7. The receiver RS performs real-time position estimation in the receiving device and a position is estimated by comparing delays of arrival between said mark symbols received from said at least three sound sources in the receiving device. Fig. 5 illustrates the transmission via an acoustical path APath at least characterized by the occurrence of echo ECO, equalisation EQ and surrounding noise SN, which determine applicable parameter of the acoustical path APath with regard to audibility, robustness and data rate. That means that the size of a block of patterns, the data rate and the number of loudspeakers have to be selected according to the size of the hall and the objects arranged in the hall. Is has been found that 8k to 64k samples are a size optimal for a block of pattern at a sampling rate of about 48 kHz. Furthermore, the length of the half of a block in the time domain should be larger than a maximum time delay difference from two sound sources at a location to be determined to ensure a correct identification of the sound sources.

On the other hand, low processor power shall be needed in a system where position estimation in indoor environment shall be used to provide a visitor V of an exhibition at a current position with additional information about an object arranged in the area of said position. Therefore, an apparatus as illustrated in Fig. 5 is disclosed wherein the receiver RS performs real-time position estimation by comparing delays of arrival between mark symbols received from at least three sound sources in the receiving device and the receiver RS provides additional information INFO according to a current position of the microphone MIC of the receiving device in a hall or room. The current position of the microphone MIC as e.g. two distances px, py orthogonal to walls W1, W2 is calculated in the receiving device by correlating a mark symbol of a watermark in a pattern individual for at least three sound sources in the receiver RS as shown above.

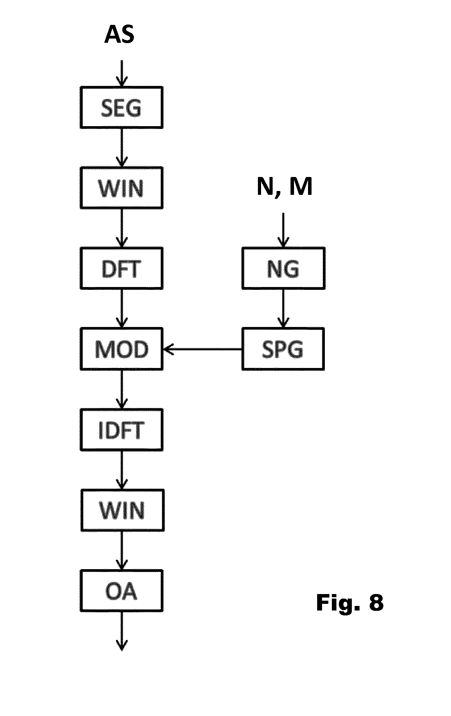

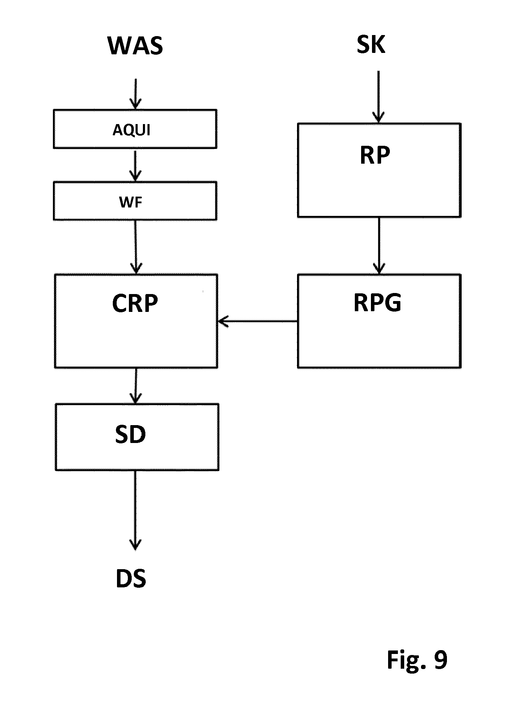

The method for embedding audio watermarks different and unique for each loudspeaker is illustrated by a flow chart in Fig. 8 which illustrates that the audio signal at first is segmented SEG in overlapping blocks of samples and a sliding window is applied - a so-called windowing WIN - to avoid interruptions and to equalise overlapping parts of the blocks of audio signals. It is common practice in audio processing to apply a short-time Fourier transform to obtain a time-frequency representation of the signal so as to mimic the behaviour of the ear. The short-time Fourier transform consists of segmenting the input signal in blocks of samples of a predetermined length using a sliding window with a hop-size of samples, and applying the Discrete Fourier Transformation DFT to each block after multiplication by an analysis window. This analysis phase results in a collection of DFT-transformed windowed blocks which is fed to the subsequent watermark embedding process comprising a modulation MOD with symbol patterns provided by a symbol pattern generator SPG supplied by a noise generator NG providing different pseudo random noise signals according to a number of mark symbols N and a number M of symbol pattern and individual watermarks respectively. Mark symbols N are pseudo random noise patterns generated with a specific seed, and different symbol patterns and watermarks respectively are patterns generated with different mark symbols at the same or different position in a pattern, or different symbol patterns are patterns generated with the same mark symbol at a different location in the pattern. The audio signal is modulated with symbol patterns in the Fourier domain of the audio signal and afterwards by an inverse Discrete Fourier Transformation IDFT reconstructed during a so-called synthesis phase. In a nutshell, the blocks are inverse-transformed and multiplied by a synthesis window WIN that suppresses audible artefacts by fading out spectral discontinuities at frame or block boundaries. The resulting blocks are added together OA with the appropriate time offset and mapped back to the time domain. The combination of the segmenting-windowing-DFT in the analysis phase and the IDFT-windowing overlap-add in the synthesis phase is the so-called weighted overlap add technique abbreviated as WOLA. We will refer to the coefficients in between the analysis and synthesis phases as WOLA coefficients to explain a relation with regard to the watermark detection method illustrated by a flow diagram in Fig. 9 which starts with an acquisition AQUI of watermarked audio signals WAS with the microphone MIC, analog/digital converting in analog/digital converter A/D and buffering in the buffer BUF of the receiver RS. The whitening filter WF processes audio samples stored in the buffer BUF to segment and window the samples in blocks, performs a transformation of the blocks into a frequency domain, setting a magnitude equal to 1 and a transformation back into the time domain with overlap-add blocks to provide a collection of audio blocks for correlation. That means that the whitening process performed in the whitening filter WF consists in mapping the signal to the WOLA domain, setting the magnitude of the WOLA coefficients to 1, and returning to the time domain.

To assess the presence of a symbol as a mark symbol or a zero base pattern, the audio watermark detector WMD of the receiver RS in Fig. 5 computes a cross-correlation score for all symbols so that a correlation lag is determined by the number of samples between the symbols to measure and to determine a delay in arrival. Similar to the audio watermarks generated in the audio watermark embedder E1 ... En, reference patterns are generated in Fig. 9 by a reference pattern generator RPG in the audio watermark detector WMD. Therefore, a random phase generator RP preferably controlled by a key SK is connected to the reference pattern generator RPG for a correlation of all reference patterns as generated by the audio watermark embedders E 1 ... En. That means that the correlator CR of the audio watermark detector WMD of the receiver RS correlates whitened audio signals with all reference patterns of the audio signals distributed to loudspeakers L1 to Ln to perform a symbol detection SD so that a detected symbol DS is provided for further processing.

If a symbol is embedded in a received audio stream, the correlator CR exhibits a strong peak for a given correlation lag, whose position depends on the location of the symbol in the watermark and the time of arrival. The detection procedure of the watermarking system therefore first isolates the position and the amplitude of the correlation result peak for each symbol, and then identifies which symbol exhibits the largest peak. If the peak is larger than some detection threshold in the pattern detector PL shown in Fig. 7, the symbol is decoded, otherwise the audio watermark detector WMD reports that there is no watermark and nothing will be further executed.

Although an audio watermark is not perceptible by a human being, the delay between and the kind of watermark is detectable by correlating with reference patterns individual watermarks embedded in the sound signal provided by loudspeakers L1 ... Ln, and a position estimation is realised with low expenditure.

The correlation of watermark symbols identifying the sound sources results in a number of counted samples identifying differences in distances of the microphone MIC with regard e.g. to a first loudspeaker L1 as a first source of sound. Although said differences are only relative and not absolute differences, by using a system, a method and an arrangement as mentioned above, position estimation is achieved which is e.g. applicable to provide a visitor V of a museum in a large hall via mobile device with additional information about objects of the exhibition the visitor is interested in.

Although the present invention has been described in terms of the presently preferred embodiment, it is to be understood that such disclosure is not to be interpreted as limiting. Various alternations and modifications will no doubt become apparent to those skilled in the art after reading the above disclosure. Accordingly, it is intended that the appended claims be interpreted as covering all alternations and modifications as fall within the true spirit and scope of the claims.

## Claims

1. Method for real-time position estimation using audio watermarking and a receiving device receiving at a current position a sound signal from each of a set of at least three sound signal sources each providing the same or different audio signals but with an individual watermark, and wherein the individual watermark embedded in the audio signal comprises
a mark symbol in a pattern individual for the at least three sound sources, and wherein the real-time position of the receiving device is estimated by comparing delays of arrival between said mark symbols received from said at least three sound sources in the receiving device.

2. Method according to claim 1, wherein the mark symbol in a pattern individual for the at least three sound signal sources is a mark symbol (A) at an individual position in the pattern for each of the at least three sound sources.

3. Method according to claim 1, wherein the mark symbol in a pattern individual for the at least three sound signal sources is an individual mark symbol (A, B, C) at the same position in the pattern for each of the at least three sound sources.

4. Method according to claim 1, wherein the mark symbol in a pattern individual for the at least three sound signal sources is an individual mark symbol (A, B, C) at the same position or a mark symbol (A, B, C) at an individual position in the pattern for each of more than at least three sound sources.

5. Method according to claim 1, wherein the mark symbol in a pattern individual for the at least three sound signal sources is a non-zero base pattern present at most once in the pattern and the pattern individual for the at least three sound signal sources comprises furthermore zero base pattern (0) present several times in the pattern.

6. Method according to one of the claims 1 to 5, wherein comparing delays of arrival between said mark symbols received from said at least three sound sources in the receiving device is performed by correlating the individual watermarks transmitted to the receiving device from the at least three sound sources.

7. Method according to one of the claims 1 to 6, wherein correlating the individual watermarks transmitted to the receiving device from the at least three sound sources is performed by an analog/digital conversion in an analog/digital converter (ADC) and buffering the audio signal in a buffer (BUF) received within the receiving device, whitening the buffered signal in a whitening filter (WT) and applying the whitened signal to a correlator (CR) performing a correlation about all base pattern included in the received audio signal in a first feedback loop to the input of the correlator (CR) and applying the base pattern correlated signal to a pattern detector (PL) providing with a second feedback loop to the input of the buffer (BUF) over all pattern blocks individual pattern for each of the at least three sound sources.

8. Method according to one of the claims 1 to 7, wherein a current position of the receiving device relative to the sound sources is calculated by a calculator of the receiving device transforming delays of arrival between said mark symbols received from said at least three sound sources in the receiving device into distance differences (d2, d3, d4) of the receiving device to said sound sources arranged in a predetermined distance to each other.

9. Method according to one of the claims 1 to 8, wherein the sound sources are arranged in corners of a rectangular hall with walls (W1, W2) and a current position of the receiving device in the hall is calculated by applying said distance differences (d2, d3, d4) to the geometry of the hall.

10. Method according to one of the claims 7 to 8, wherein transforming the delays of arrival between said mark symbols received from said at least three sound sources in the receiving device into distance differences (d2, d3, d4) of the receiving device to said sound sources is performed by a processor counting differences between the number of samples (S2, S3, S4) corresponding to the delays of arrival between said mark symbols received from said at least three sound sources multiplied with the speed of sound and divided by the sampling frequency of the audio signal in the receiving device.

11. Method according to one of the claims 1 to 10, wherein the method for real-time position estimation in indoor environment with audio watermarking and a receiving device receiving at a current position a sound signal from each of a set of at least three sound signal sources providing each the same audio signal with an individual watermark is used to provide additional information stored in the receiving device or requested and received via a further communication channel.

12. Apparatus for real-time position estimation using audio watermarking and a receiving device receiving at a current position a sound signal from each of a set of at least three sound signal sources each providing the same or different audio signals but with an individual watermark, and wherein the receiving device of the apparatus comprises
a correlator to identify a mark symbol in a pattern of a watermark individual for the at least three sound sources and
a processor comparing delays of arrival between said mark symbols received from said at least three sound sources with regard to a specific sound source identified by the mark symbol in a pattern of a watermark individual for the sound sources and estimating a current position by relating said delay to a predetermined arrangement of the sound sources.

13. Apparatus according to claim 12, wherein the correlator to identify a mark symbol in a pattern of a watermark individual for the at least three sound sources is an integrated part of the processor comparing delays of arrival between said mark symbols received from said at least three sound sources with regard to a specific sound source identified by the mark symbol in a pattern of a watermark individual for the sound sources and estimating a current position by relating said delay to a predetermined arrangement of the sound sources.

14. Apparatus according to of the claims 12 to 13, wherein the processor comprises furthermore a calculator for relating the estimated position to a predetermined area for providing additional information at arrival of the receiving device in said area.

15. System for real-time position estimation using audio watermarking and a receiving device receiving at a current position a sound signal from each of a set of at least three sound signal sources each providing the same or different audio signals but with an individual watermark, and wherein
a transmitter and a receiving device are provided and
the transmitter comprises embedders (E1 to En) for embedding a watermark individual by an mark symbol in a pattern individual for each one of at least three sound sources and
the receiving device comprises a correlator to identify the mark symbol in the pattern of the watermark assigned to a specific sound source for comparing delays of arrival between said mark symbols received from said at least three sound sources and estimating a current position by relating said delay to a predetermined arrangement of the sound sources.

16. System according to claim 14, wherein the estimated position of the receiving device is generated in the receiving device and is used to provide additional information reproduced by the receiving device if the estimated position is within a predetermined area including the estimated position.

**Fig. 1**

EP 2 899 720 A1

EP 2 899 720 A1

**Fig. 2**

WS 1

L1: A 0 0 0
L2: 0 A 0 0
L3: 0 0 A 0
L4: 0 0 0 A

**Fig. 3**

WS 2

L1: A 0 0 0 0
L2: B 0 0 0 0
L3: C 0 0 0 0
L4: 0 A 0 0 0
L5: 0 C 0 0 0
L6: 0 0 B 0 0

**Fig. 4**

**Fig. 5**

EP 2 899 720 A1

**Fig. 6**

EP 2 899 720 A1

**Fig. 7**

EP 2 899 720 A1

**AS**

```
      ┌───────┐
      │  SEG  │
      └───────┘
          │
          ▼
      ┌───────┐              N, M
      │  WIN  │
      └───────┘                │
          │                    ▼
          ▼              ┌───────┐
      ┌───────┐          │  NG   │
      │  DFT  │          └───────┘
      └───────┘              │
          │                  ▼
          ▼              ┌───────┐
      ┌───────┐◄─────────│  SPG  │
      │  MOD  │          └───────┘
      └───────┘
          │
          ▼
      ┌───────┐
      │  IDFT │
      └───────┘
          │
          ▼
      ┌───────┐
      │  WIN  │
      └───────┘
          │
          ▼
      ┌───────┐
      │  OA   │            Fig. 8
      └───────┘
          │
          ▼
```

**Fig. 9**

Europäisches
Patentamt

European
Patent Office

Office européen
des brevets

# EUROPEAN SEARCH REPORT

Application Number

EP 14 30 5090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUTA NAKASHIMA ET AL: "Determining Recording Location Based on Synchronization Positions of Audiowatermarking", PROCEEDINGS OF ICASSP 2007, 15 April 2007 (2007-04-15), pages 253-256, XP055115974, DOI: 10.1109/ICASSP.2007.366220 ISBN: 978-1-42-440727-9 | 1,6,8-16 | INV. G10L19/018 G01C21/20 |
| Y | * section 2; page 253 - page 254 * * section 4; page 254 * * section 3; page 254 * ----- | 2-5,7 | |
| Y | EP 0 828 372 A2 (NEC CORP [JP]) 11 March 1998 (1998-03-11) * page 4, column 5, line 56 - page 4, column 6, line 7 * * page 4, column 6, line 38 - line 51 * ----- | 2-5,7 | |
| A | US 2012/214544 A1 (SHIVAPPA SHANKAR THAGADUR [US] ET AL) 23 August 2012 (2012-08-23) * the whole document * ----- | 1-16 | TECHNICAL FIELDS SEARCHED (IPC) G10L G01C |
| A | NAKASHIMA Y ET AL: "Watermarked Movie Soundtrack Finds the Position of the Camcorder in a Theater", IEEE TRANSACTIONS ON MULTIMEDIA, IEEE SERVICE CENTER, PISCATAWAY, NJ, US, vol. 11, no. 3, 1 April 2009 (2009-04-01), pages 443-454, XP011346583, ISSN: 1520-9210, DOI: 10.1109/TMM.2009.2012938 * the whole document * ----- | 1-16 | |

The present search report has been drawn up for all claims

| Place of search | Date of completion of the search | Examiner |
|---|---|---|
| The Hague | 12 May 2014 | Ziegler, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 14 30 5090

This annex lists the patent family members relating to the patent documents cited in  the above-mentioned European search report.
The members are as contained in the European Patent Office EDP file on
The European Patent Office is in no way liable for these particulars which are merely given for the purpose of information.

12-05-2014

| Patent document cited in search report | | Publication date | Patent family member(s) | | Publication date |
|---|---|---|---|---|---|
| EP 0828372 | A2 | 11-03-1998 | DE 69738286 T2 | | 18-09-2008 |
| | | | EP 0828372 A2 | | 11-03-1998 |
| | | | US 5848155 A | | 08-12-1998 |
| US 2012214544 | A1 | 23-08-2012 | NONE | | |

EPO FORM P0459

For more details about this annex : see Official Journal of the European Patent Office, No. 12/82